# EUROPÄISCHE PATENTANMELDUNG

(11) **EP 0 897 965 A2**
(43) Veröffentlichungstag der Anmeldung: **24.02.1999**
(21) Anmeldenummer: 98120500.8
(22) Anmeldetag: 22.08.1995
(51) Int. Cl.: C09J 11/00, C09J 201/00

(54) **Physikalisch und/oder chemisch abbindende Bindemittel**

(30) Priorität: 31.08.1994 DE 4430875
(62) Teilanmeldung aus: 95931182.0
(71) Anmelder: Henkel KGaA, 40589 Düsseldorf (DE)
(72) Erfinder: Böge, Kai, Dr., 40217 Düsseldorf (DE); Daute, Peter, Dr., 27616 Beverstedt (DE); Fies, Matthias, Dr., 47800 Krefeld (DE); Klauck, Wolfgang, Dr., 40670 Meerbusch (DE); Klein, Johann, Dr., 40593 Düsseldorf (DE); Schieferstein, Ludwig, Dr., 40882 Ratingen (DE)

(57) **Zusammenfassung**

Es werden physikalisch und/oder chemisch abbindende Bindemittel beschrieben, die durch Fettstoffe modifiziert wurden. Als Fettstoffe kommen besonders in Frage: Ester von Fettsäuren oder Fettalkoholen, insbesondere Triglyceride von höheren Fettsäuren, vorzugsweise natürlichen Fette und Öle. Sie können den Bindemitteln - insbesondere synthetischen Polymeren wie Homo- und Co-Polyvinylacetat - in hohen Konzentrationen zugesetzt werden, ohne daß dadurch die Bindungseigenschaften unbrauchbar werden. Ihr Zusatz ist aber vorteilhaft bezüglich der Benetzungseigenschaften, der Wasserfestigkeit und vor allem der Härte. Auf Basis der erfindungsgemäßen Bindemittel können vor allem Dispersions-Klebstoffe, Schmelzklebstoffe und Klebestifte verbessert werden.

## Beschreibung

Die Erfindung betrifft Bindemittel, deren Herstellung und Verwendung zum Kleben, Beschichten und Dichten.

Unter Bindemittel sollen solche Stoffe verstanden werden, die gleiche oder verschiedenartige Substrate verbinden oder selbst darauf fest haften können. Sie basieren in der Regel auf Stoffen, insbesondere Polymeren, die chemisch oder physikalisch abbinden. Die physikalische Abbindung besteht in einer Erstarrung aus der Schmelze oder in der Trocknung einer wäßrigen oder organischen Lösung bzw. Dispersion. Die Stoffe bzw. Polymeren werden in der Regel durch Zusätze so modifiziert, daß sie zum Kleben, klebenden Dichten und Beschichten besser geeignet sind. Derartige Zusätze sind z.B. Harte, Weichmacher, Lösungsmittel, Füllstoffe, Pigmente, Beschleuniger, Stabilisatoren und Dispergiermittel. Auf derartig modifizierten Bindemitteln basieren also die Klebstoffe, die Dichtungsmassen und die Beschichtungsmittel.

Weichmacher werden zugesetzt, um bei Klebstoffen, Dichtungsmassen und Beschichtungsmitteln das Formveränderungsvermögen zu verbessern bzw. die Härte zu verringern. Es handelt sich dabei um flüssige oder feste, in der Regel indifferente organische Substanzen mit geringem Dampfdruck. Nach dem allgemeinen Fachwissen (siehe Habenicht, Gerd: "Kleben: Grundlagen, Technologie-Anwendungen", 2. Auflage, 1990, Seite 100) liegt der Nachteil weichmacherhaltiger Klebschichten in den verschlechterten Alterungs- und Haftungseigenschaften, weiterhin in den reduzierten Klebschicht-Festigkeiten, deren Kriechneigung und deren Auswanderungstendenz. Es bedarf daher einer wohl abgewogenen Prüfung der Prioritäten zwischen Verformungsfähigkeit auf der einen Seite und Festigkeit auf der anderen Seite. In "Ullmanns Encyclopädie der technischen Chemie" wird unter dem Stichwort "Weichmacher" auch die Anwendung von Weichmachern beschrieben (siehe Seiten 371 bis 377, Band 24, 4. Auflage, 1983). Demnach ist für Klebstoffe auf der Basis von Polyvinylacetat Dibutylphthalat, eventuell zusammen mit Trikresylphosphat, der beliebteste Weichmacher. Die Verträglichkeit der Phthalsäureester mit Polyvinylacetat hört beim Diamylphthalat auf. Dioctylphthalat ist für das Polymerisat ungeeignet. Für pulverförmige Schmelzkleber steht Dicyclohexylphthalat zur Verfügung. Es werden 25 bis 30 % Weichmacher dem Polyvinylacetat zugesetzt. Die sogenannten Alleskleber enthalten maximal 10 % Weichmacher, auf das Bindemittel berechnet; viele Erzeugnisse dieser Art sind sogar weichmacherfrei. Aus hochmolekularem Polyvinylchlorid hergestellten Klebstoffe werden nur dann Weichmacher wie z.B. Dioctylphthalat in kleinen Mengen zugesetzt, wenn sie zum Verkleben von Weichfolien bestimmt sind. Für Polyvinylacetat-Lacke sind Dibutylphthalat und Trikresylphosphat allein oder in Mischung die wichtigsten Weichmacher. Auch Adipinsäureester, außer den Polymer-Weichmachern sind geeignet, während Ester höherer Fettsäuren und Ricinusöl nicht brauchbar sind (siehe Seite 376, linke Spalte).

Der Weichmacher kann auch in das Polymer eingebaut sein (innerer Weichmacher). Dazu werden geeignete Comonomere eingesetzt, im Falle von Vinylacetat z.B. Vinyllaurat, Vinylstearat oder Dioctylmaleinat. Hierbei ist eine Wanderung des Weichmachers ausgeschlossen. Das Herstellungsverfahren ist aber sehr aufwendig, da zunächst die Comonomeren hergestellt werden müssen und die Art und Konzentration des Comonomeren für jeden Anwendungszweck unterschiedlich ist.

In der älteren deutschen Anmeldung DE 43 24 474 wird eine Polyvinylacetat-Dispersion zur Sand- bzw. Erdwall-Befestigung beschrieben. Sie enthält als Weichmacher naturbasierte Triester des Glycerins von aliphatischen Monocarbonsäuren mit 2 bis 6 C-Atomen im Molekül, Zitronensäuretriester mit aliphatischen Monoalkoholen mit 2 bis 6 C-Atomen sowie epoxidiertes Rüböl oder epoxidiertes Sojaöl in einer Menge von etwa 1 bis 15 Gew.-%, bezogen auf eine ca. 50 gew.-%ige wäßrige Polyvinylacetat-Dispersion. Der Inhalt dieser Lehre soll vom Schutz ausgenommen werden.

Die erfindungsgemäße Aufgabe besteht darin, Bindemittel weichzumachen bzw. zu elastifizieren und dennoch die üblichen Nachteile nicht zu erhalten, insbesondere die Haftung nicht auf unakzeptable Werte zu verringern.

Die erfindungsgemäße lösung ist den Patentansprüchen zu entnehmen. Sie besteht im wesentlichen in dem Zusatz von Fettstoffen. Daß dabei die Festigkeit kaum verändert wird, ist als überraschend anzusehen, angesichts der ständigen Forderung (siehe Klebstoff-Tuben), die Substratoberflächen zu trocknen und fettfrei zu machen, um eine gute Haftung zu erzielen. Die Überraschung ist deswegen besonders groß, weil der Gehalt an Fettstoffen nicht nur wenige Prozent, sondern im allgemeinen 0,5 bis 60 und zweckmäßigerweise 10 bis 50 Gew.-%, insbesondere 15 bis 40 Gew.-%, bezogen auf das Bindemittel betragen kann. Die Zugscherfestigkeit von Klebstoffen beträgt dann immer noch > 1, vorzugsweise > 2, insbesondere > 4 N/mm² für Buchenholz.

Unter Fettstoffen sind Fettsäuren, Fettalkohole und deren Derivate zu verstehen. Vorzugsweise werden Fettstoffe mit einer Molmasse > 300 bzw. oligomerisierte Fettstoffe mit einer Molmasse > 1000 eingesetzt. Sie sind lipophil.

Unter "Fettsäuren" werden Säuren verstanden, die eine oder mehrere Carboxyl-Gruppen (-COOH) enthalten, vorzugsweise eine. Die Carboxyl-Gruppen können mit gesättigten, ungesättigten und/oder verzweigten Alkyl-Resten mit mehr als 8 C-Atomen verbunden sein. Sie können weitere Gruppen wie Ether-, Ester-, Halogen-, Amid-, Amino-, Urethan-, Hydroxy- und Harnstoffgruppen enthalten. Bevorzugt werden jedoch Carbonsäuren wie native Fettsäuren oder Fettsäuregemische, Dimerfettsäuren und Trimerfettsäuren. Konkrete Beispiele für die erfindungsgemäßen Carbonsäuren sind: Capron-, Capryl-, Caprin-, Laurin-, Myristin-, Palmitin-, Stearin-, Isostearin-, Isopalmitin-, Arachin-, Behen-, Cerotin- und Melissin-Säuren sowie die ein- oder mehrfach ungesättigten Säuren Palmitolein-, Öl-, Elaidin-, Petroselin-, Eurca-, Linol-, Linolen, Gadoleinsäure sowie durch Oligomerisierung erhaltene Fettsäuren, z.B. Dimerfettsäuren. Neben der in der Natur vorkommenden Ricinolsäure mit dem Derivat 12-Hydroxystearinsäure können auch Polyhydroxyfettsäuren eingesetzt werden. Diese können z.B. dadurch hergestellt werden, daß ungesättigte Fettsäuren epoxidiert und mit H-aktiven Verbindungen, z.B. Alkoholen, Carbonsäuren, Aminen ringgeöffnet werden. Die Carbonsäuren können auch durch chemische Modifikation von Fetten und Ölen hergestellt werden. Die Fette oder Öle bzw. daraus hergestellte Derivate können sowohl pflanzlichen als auch tierischen Ursprungs sein oder gegebenenfalls gezielt auf petrochemischem Weg synthetisiert werden.
Als Carbonsäuren kommen auch Derivate aller Öl- und Fett-basierten Rohstoffe in Frage, die z.B. durch En-Reaktionen, Umesterungen, Kondensationsreaktionen, Pfropfung (z.B. mit Maleinsäureanhydrid oder Acrylsäure usw.) und z.B. Epoxidierungen mit anschließender Ringöffnung zugänglich sind. Derartige fettchemische Grundreaktionen lassen sich bevorzugt an Fetten und Ölen mit Doppelbindungen und/oder OH-Gruppen durchführen, z.B. an Fetten und Ölen von Raps (neu), Sonnenblumen, Soja, Lein, Kokosnüssen, Ölpalmen, Ölpalmkernen und Ölbäumen. Bevorzugte Fette und Öle sind z.B. Rindertalg mit einer Kettenverteilung von 67 % Ölsäure, 2 % Stearinsäure, 1 % Heptadecansäure, 10 % gesättigte Säuren der Kettenlänge C₁₂ bis C₁₆, 12 % Linolsäure und 2 % gesättigte Säuren mit > C₁₈ Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure.
En-Reaktionen werden bei erhöhter Temperatur mit z.B. Säureanhydriden an ungesättigten Fetten und Ölen durchgeführt. Epoxidierungen von Doppelbindungen und anschließende Ringöffnung mit z.B. Aminen, Aminoalkoholen, Alkoholen, Diolen, Polyolen, Hydroxycarbonsäuren oder Polycarbonsäuren ermöglichen z.B. den Zugang zu den benötigten Fett- und Öl-basierten Ausgangsrohstoffen mit Säure- oder Säureanhydridgruppen. Auch die Fettsäuren als Spaltprodukte der Fette und Öle mit ungesättigten Gruppen oder OH-Funktionen können für derartige Reaktionen herangezogen werden. Weitere Reaktionen wie z.B. simultane oder nachträgliche Kondensations- oder Umesterungsreaktionen können zu einem Molekulargewichtaufbau der COOH-terminierten Fett- und Öl-basierten Bausteine führen. Der Oligomerisationsgrad bzw. das Molekulargewicht und die Art der Ausgangsrohstoffe sollten nach dem Fachmann allgemein bekannten Gesichtspunkten so gewählt werden, daß das resultierende Oligomere gut verarbeitbar sind.

Als Derivate der obengenannten Fettsäuren können Ester oder Partialester mit ein- oder mehrwertigen Alkoholen hergestellt werden. Unter "Alkoholen" sind Hydroxyl-Derivate von aliphatischen und alicyclischen gesättigten, ungesättigten und/oder verzweigten Kohlenwasserstoffen zu verstehen. Es kommen sowohl 1- als 2- oder höherwertige Alkohole in Frage. Hierzu gehören neben einwertigen Alkoholen auch die aus der Polyurethan-Chemie an sich bekannten niedermolekularen Kettenverlängerungsmittel bzw. Vernetzer mit Hydroxylgruppen. Konkrete Beispiele aus dem niedermolekularen Bereich sind Methanol, Ethanol, Propanol, Butanol, Pentanol, 2-Ethylhexanol, 2-Octanol, Ethylenglykol, Propylenglykol, Trimethylenglykol, Tetramethylenglykol, Butylenglykol-2,3, Hexamethylendiol, Octamethylendiol, Neopentylglykol, 1,4-Bishydroxymethylcyclohexan, Guerbetalkohol, 2-Methyl-1,3-Propandiol, Hexantriol-(1,2,6), Glycerin, Trimethylolpropan, Trimethylolethan, Pentaerythrit, Sorbit, Formit, Methylglycosid, Butylenglykol, die reduzierten Dimer- und Trimer-Fettsäuren sowie höheren Polyethylen-, Polypropylen- und Polybutylenglykole. Monophenylglykol oder von Kollophoniumharzen abgeleitete Alkohole wie Abietylalkohol können ebenfalls für die Veresterung verwendet werden. Anstelle der Alkohole können auch OH-haltige tertiäre Amine verwendet werden.
Die Veresterung mit Alkoholen kann auch unter Zusatz von anderen Polycarbonsäuren zur Oligomerisierung durchgeführt werden. Beispiele für Dicarbonsäuren sind Oxalsäure, Malonsäure, Bernsteinsäure, Maleinsäure, Fumarsäure, Glutarsäure, Adipinsäure, Korksäure, Sebacinsäure, 1,11-Undecandisäure, 1,12-Dodecandisäure, Phthalsäure, Isophthalsäure, Terephthalsläure, Hexahydrophthalsäure, Tetrahydrophthalsäure oder Dimerfettsäure. Bevorzugt wird Adipinsäure verwendet.
Als Derivate können auch Amide der obengenannten Fettsäuren verwendet werden. Diese können durch Umsetzung mit primären und sekundären Aminen oder Polyaminen erhalten werden, z.B. mit Monoethanolamin, Diethanolamin, Ethylendiamin, Hexamethyldiamin, Ammoniak etc..

Unter "Fettalkoholen"werden Verbindungen verstanden, die eine oder mehrere Hydroxylgruppen enthalten. Die Hydroxylgruppen können mit gesättigten, ungesättigten und/oder verzweigten Alkylresten mit mehr als 8 C-Atomen verbunden sein. Sie können weitere Gruppen enthalten, z.B. Ether-, Ester-, Halogen-, Amid-, Amino-, Harnstoff- und Urethan-Gruppen. Konkrete Beispiele für die erfindungsgemäßen Fettalkohole sind: Ricinoleyl-, Erucaalkohol, 12-Hydroxystearylalkohol, Capronalkohol, Caprylalkohol, Pelargoanalkohol, Caprinalkohol, Laurylalkohol, Myristylalkohol, Cetylalkohol, Stearylalkohol, Oleylalkohol, Erucylalkohol, Ricinolalkohol, Linoleylalkohol, Linolenylalkohol, Arachidylalkohol, Gadoleylalkohol, Behenylalkohol, Erucylalkohol, Brassidylalkohol.
Als Derivate der Fettalkohole können symmetrische und unsymmetrische Ether und Ester mit verschiedenen Mono- und Polycarbonsäuren eingesetzt werden. Unter Monocarbonsäuren versteht man Ameisen-, Essig-, Propion-, Butter-, Valerian-, Capron-, Önanth-, Capryl-, Pelargon-, Caprin-, Undecan-, Laurin-, Tridecan-, Myristin-, Pentadecan-, Palmitin-, Margarin-, Stearin-, Nonadecan-, Arachin-, Behen-, Lignocerin-, Cerotin- und Melissinsäure. Polycarbonsäuren sind z.B. Oxalsäure, Adipinsäure, Maleinsäure, Weinsäure und Zitronensäure. Gleichzeitig können als Carbonsäure auch die oben beschriebenen Fettsäuren eingesetzt werden.
Vorzugsweise werden Ester des Glycerins mit Fettsäuren und ihre über Epoxidation zugänglichen Derivate verwendet. Als Beispiel für derartige Derivate seien genannt: Epoxystearinsäuremethylester, Epoxystearinsäuren, -2-Ethyl-hexylester. Von den Glyceriden werden die Triglyceride bevorzugt, z.B. Sojaölepoxid, Leinölepoxid, Rübölepoxid, epoxidiertes Sonnenblumenöl.
In einer weiteren bevorzugten Ausführungsform der Erfindung können mit Nucleophilen ringgeöffnete epoxidierte Triglyceride ungesättigter Fettsäuren eingesetzt werden. Unter Nucleophilen sind Alkohole wie z.B. Methanol, Ethanol, Ethylenglykol, Glycerin oder Trimethylolpropan oder Carbonsäuren wie z.B. Essigsäure, Dimerfettsäure, Maleinsäure, Phthalsäure oder ein Gemisch von Fettsäuren mit 6 bis 36 C-Atomen zu verstehen.
Die Fettalkohole können auch verethert sein, insbesondere mit gleichen oder anderen Fettalkoholen, aber auch mit anderen mehrwertigen Alkoholen, z.B. Alkylpolyglykoside.

Zweckmäßigerweise werden jedoch Fette und Öle (Triglyceride) in nativer Form eingesetzt. Unter Umständen können sie auch nach thermischer und/oder oxidativer Behandlung verwendet werden. Es ist auch möglich, die über Epoxidation oder über die Addition von Maleinsäureanhydrid zugänglichen Derivate einzusetzen. Konkrete Beispiele sind: Palmöl, Erdnußöl, Rüböl, Baumwollsaatöl, Sojaöl, Ricinusöl, Sonnenblumenöl, Leinöl, Standöle, geblasene Öle, epoxidiertes Sojaöl, epoxidiertes Leinöl, Rapsöl, Kokosöl, Palmkernöl und Talge, wenn der Fettstoff dem fettigen Polymer zugesetzt wird, und größer als 100, wenn er bei einer radikalischen Polymerisation anwesend ist. Diese Fettstoffe eignen sich besonders für Polyvinylester.

Natürlich können auch Gemische obiger Fettstoffe zugesetzt werden.

Im Falle von ungesättigten Fettstoffen ist es zweckmäßig, Sikkative in Mengen von 1 bis 5 Gew.-%, bezogen auf den Fettstoff zuzusetzen. Konkrete Beispiele sind Naphthenate, Octoate, Linoleat oder Resinate von Co, Mn, Pb oder deren Mischungen.

Bei den "Bindemitteln" handelt es sich um die üblichen anorganischen oder organischen Stoffe, insbesondere um natürliche oder synthetische Polymere.
Als anorganische Bindemittel kommen z.B. in Frage: Wasserglas, Zement, Gips, Anhydrit, Magnesia oder Kalk. Diese Bindemittel zeichnen sich durch eine besonders hohe Härte und oftmals durch eine nicht ausreichende Wasserfestigkeit aus. Hier kann es von besonderem Vorteil sein, vor oder während der Aushärtungsphase erfindungsgemäß die Fettstoffe hinzuzufügen, um die Elastizität und die Wasserfestigkeit zu verbessern.

Als natürliche Polymere kommen z.B. in Frage: Stärke, Dextrin, Casein, Glutin und Celluloseether.

Die synthetischen Polymere haben ein durchschnittliches Molekulargewicht von 8 000 bis 2 000 000, vorzugsweise 10 000 bis 800 000 und insbesondere von 30 000 bis 300 000. Die Polymeren können auch noch Monomere in untergeordneter Menge enthalten, z.B. < 20, insbesondere < als 5 Gew.-%, bezogen auf das Polymere. Sie bilden üblicherweise die Basis für Schmelz-, Plastisol-, Dispersions- und Lösungsmittelklebstoffe. Es handelt sich dabei um folgende Polymere: Polyurethane, Poly(meth)acrylate, Polyvinylester, Polystyrol, Polybutadien, Polyamide, Polyester und Polyvinylchlorid. Vorzugsweise sind ausgenommen: Polystyrol und Polycyanoacrylat.

Natürlich sind auch die entsprechenden Copolymerisate brauchbar, z.B. aus Polyvinylester/Ethylen, Polyacrylat/Vinylester. Die bevorzugten Polymeren sind Polyurethane, Polyacrylate mit 1 bis 22, insbesondere 1 bis 4 C-Atomen in der alkoholischen Komponente und Polyvinylester mit 1 bis 22, insbesondere 1 bis 10 C-Atomen in dem Säurerest, z.B Vinylacetat, Vinylpropionat, Vinylbutyrat, Vinylversatat, Vinyllaurat, Vinylstearat oder Ethyl-, Butyl- und 2-Ethylhexylacrylat. Besonders bevorzugt ist Polyvinylacetat. Darunter sind auch seine Copolymerisate zu verstehen, insbesondere mit Ethylen, Acrylaten, Acrylsäure, Methacrylsäure und Maleinaten, insbesondere mit bis 8 C-Atomen in der Alkoholkomponente, Vinylchlorid und Crotonsäure. Konkrete Comonomere des Vinylacetats sind: Dibutyl- und Diethylmaleat, Ethyl-, Butyl- und 2-Ethylhexylacrylat. Typische Terpolymere werden aus Vinylacetat und Butylacrylat/N-hydroxyethyl-acrylamid, Ethylen/Vinylchlorid, Vinyllaurat/Vinylchlorid und Ethylen/Acrylamid erhalten. Die Acetatgruppen können auch teilweise verseift sein.

Die Menge der Comonomeren z.B. im PVAC kann 0 bis 30 Gew.-%, bezogen auf das Copolymere ausmachen.

Die Polymerisation von Vinylestern ist bekannt und wird zum Beispiel in der Encyclopedia of Polymer Science and Technology, Hrsg. Mark, Bikales, Overberger, Menges, 2.Ed., 1989, Wiley, New York, Vol. 17, S. 406 - 409, beschrieben. Sie erfolgt großtechnisch vor allem in Emulsions- oder Suspensionsform.

Die obengenannten physikalisch abbindenden Polymeren können auch noch reaktive Gruppen enthalten, die insbesondere mit der Feuchtigkeit, dem Licht oder dem Sauerstoff der Luft reagieren. Konkrete Beispiele sind: Isocyanat- und Silan-Gruppen. Sie sind in einer Konzentration von bis zu 10 Gew.-%, bezogen auf das Polymere enthalten.

Neben den physikalisch abbindenden Bindemitteln und den physikalisch/chemisch abbindenden Bindemitteln kommen auch die chemisch abbindenden Polymere in Frage. Es kann sich dabei um Sauerstoff-induzierte Nachpolymerisationen handeln, z.B. bei stark ungesättigten Ölen und Fetten wie Leinöl und Fensterkitt. Eine andere Möglichkeit ist die Feuchtigkeits-induzierte Reaktion von z.B. NCO- bzw. Alkoxysilan-terminierten Polymeren und Polymervorstufen. Schließlich kommen noch eine Reihe von einkomponentigen selbstvernetzenden Systemen in Frage, die nicht mit Wasser oder Sauerstoff abbinden. Beispiele dafür sind die lichtinduzierten Polymerisationen, insbesondere von Acrylaten, die über ionische Reaktionen ablaufende Selbstvernetzung von Dispersionen nach dem Verdampfen des Wassers bzw. des Lösemittels oder die Nachvernetzung aufgrund der Reaktion von Aldehyd- oder Ketogruppen. Bekannt sind z.B. die Vernetzung über mehrwertige Metallionen wie z.B. Zn²⁺, Zr²⁺, Fe³⁺, Al³⁺, Cr³⁺ und Mg²⁺ bzw. eine Nachvernetzung über Diaziridine oder Aldehyde bei Dispersionen mit Keto-, Aldehyd- oder Hydroxylgruppen.

Das Bindemittel kann bei Raumtemperatur (20 °C) flüssig, pastös oder fest sein. Insbesondere ist es flüssig, und zwar zweckmäßigerweise eine wäßrige Dispersion mit einem Feststoffgehalt von 20 bis 85, vorzugsweise 35 bis 80, insbesondere 45 bis 75 Gew.-%.

Die Herstellung des erfindungsgemäßen Bindemittels kann sehr flexibel gestaltet werden. So ist es möglich, den Fettstoff vor, bei oder nach der Herstellung des physikalisch abbindenden Polymeren zuzusetzen, wenn er dabei nicht stört. Das könnte z.B. bei Cyanoacrylaten zu erwarten sein.

Die Herstellung der Polymeren, wie z.B. der Polyacrylate, aber insbesondere des Polyvinylacetats, kann nach verschiedenen, in der Polymerchemie bekannten Verfahren erfolgen, z.B. über eine Massepolymerisation, eine Polymerisation in einem geeigneten Lösungsmittel, z.B. Toluol, oder aber - bevorzugt - in wäßriger Emulsion oder Suspension nach den an sich bekannten Verfahren der Emulsions- oder Suspensionspolymerisation. Bei diesen Verfahren erfolgt die Polymerisation der Monomeren und der Fettstoffe unter Zugabe eines Emulgators oder eines Schutzkolloids in Wasser.

Bevorzugt kann die Polymerisation in Anwesenheit eines Schutzkolloids durchgeführt werden. Als Schutzkolloid kommen hydrophile Polymere wie z.B. Carboxymethylcellulose oder Gummi arabicum in Frage. Besonders bevorzugt kann Polyvinylalkohol verwendet werden. Unter Polyvinylalkohol wird in diesem Sinne auch ein teilweise verseiftes Polyvinylacetat verstanden. Die Menge des Schutzkolloids kann in dem für Suspensiospolymerisationen üblichen Bereich von 0,5 bis 10 Gew.% bezogen auf Monomere liegen. Bevorzugt werden Mengen von 1 bis 3 Gew.% bezogen auf Monomere.

Die Polymerisation kann so durchgeführt werden, daß die Vinylester und gegebenenfalls andere radikalisch polymerisierbare olefinische Monomere mit den Fettstoffen gemischt werden und dieses Gemisch in eine wäßrige Lösung des Schutzkolloids gegeben wird. Diese Zugabe kann vorzugsweise kontinuierlich bei gleichzeitig ablaufender Polymerisation erfolgen, es ist aber auch eine batch-weise Polymerisation der gesamten Monomermenge möglich.

Der Festkörpergehalt der Emulsionen oder Suspensionen des erfindungsgemäßen Bindemittels liegt zwischen 20 und 75 Gew.%, vorzugsweise zwischen 40 und 60 Gew.%.

Als Initiator können organolösliche Initiatoren wie z.B. Benzoylperoxid oder wasserlösliche Initiatoren wie z.B. Wasserstoffperoxid oder die Alkali- oder Ammoniumsalze von Persulfaten verwendet werden. Auch sogenannte Redox-Initiatoren können verwendet werden. Die Menge an Initiator kann im dafür üblichen Bereich von 0,01 bis 1 Gew.% - bezogen auf Monomere - liegen. Bevorzugt werden Mengen von 0,1 bis 0,5 Gew.% verwendet. Die Reaktionstemperaturen können zwischen 20 und 95 °C, die Reaktionzeiten können zwischen 1 und 8 Stunden liegen.

Der Fettstoff kann schon während der Polymerisation zugesetzt werden, zweckmäßigerweise wird er jedoch nach der Polymerisation zugesetzt. Am einfachsten ist es, das erfindungsgemäße Bindemittel durch intensives Mischen des Fettstoffes mit einer Dispersion des Polymeren herzustellen.
Dies kann z.B. in Rühraggregaten, hochtourigen Rührern oder in einer Kugelmühle erfolgen. Es ist aber auch möglich, den Fettstoff zunächst unter Zusatz von Dispergiermitteln zu dispergieren und dann die beiden Dispersionen zu mischen. Der Fettstoff kann aber auch dem geschmolzenen physikalisch abbindenden Polymeren, gegebenenfalls in der Wärme zugemischt werden.
Je nach Verwendungszweck können dem Bindemittel noch weitere Zusatzstoffe hinzugefügt werden, z.B. Wachse, Füllstoffe, Pigmente, Dispergatoren, Stabilisatoren, Viskositätsregler, Konservierungsmittel, Lösungsmittel und Harze. Sie sind bekannt, ebenso ihre Zumischung. Die erfindungsgemäßen Fettstoffe können auch gemeinsam mit diesen Zusätzen eingemischt werden. Ein späterer Zusatz ist ebenfalls möglich.

Der erfindungsgemäße Zusatz der Fettstoffe zu den physikalisch abbindenden Polymeren bewirkt ein erhöhtes Formveränderungsvermögen sowie eine verringerte Härte. Überraschenderweise ist auch die Ausschwitzneigung zumindest bis zu Fettzusätzen von 20 Gew.-% sehr niedrig. Darüber hinaus wird auch die Wasserfestigkeit der Verklebungen positiv beeinflußt. Auch die Benetzungseigenschaften der wäßrigen Dispersionsklebstoffe sind günstiger. Dagegen wird die Festigkeit kaum verringert: Bei Holzverklebungen kommt es immer noch zu einem Holzbruch, zumindest teilweise. Das gilt auch für Warmlagerungen über längere Zeit. Auch die Wärmestandfestigkeit ist bemerkenswert hoch. Die Viskosität wird verringert und damit die Verarbeitbarkeit verbessert.

Aufgrund dieser Eigenschaften können die erfindungsgemäßen Bindemittel als Klebstoffe, klebende Dichtungsmassen und Beschichtungsmassen verwendet werden, insbesondere dann wenn es auf Spitzenwerte bei den Festigkeiten weniger ankommt als auf ein preiswertes Mittel. Insbesondere eignen sie sich für Subtrate mit unterschiedlichem elastischem Verhalten oder unterschiedlichen Wärmeausdehnungskoeffizienten, was in der Regel bei unterschiedlichen Substraten der Fall ist. Als Substrate kommen in Frage: Holz, Pappe, Papier, Wandbeläge wie Tapeten, Kork, Leder, Filz, Textilien, Kunststoffe - insbesondere Bodenbeläge aus PVC, Linoleum und Polyolefinen, sei es in Form von Folien oder textilen Flächengebilden -, mineralische Substrate wie Glas, Quarz, Schlacken, Gestein und Keramik und Metalle.

Die erfindungsgemäßen Bindemittel eignen sich insbesondere zur Herstellung von Dispersions-Klebstoffen, Klebestiften, Plastisolen und Schmelzklebstoffen bzw. von Schmelzdichtstoffen oder pastenförmigen Dichtstoffen wie Fugendichtungsmasse. Auch die Beschichtung von harten Oberflächen sowie von Textilien und Papier ist gut möglich.

Aufgrund dieser Eigenschaften eignen sich die erfindungsgemäßen Zusammensetzungen als Bindemittel zur Konfektionierung von Klebstoffen, Dichtungsmassen und Beschichtungsmassen.

Als Klebstoffe seien konkret, genannt: Schmelz-, Lösungsmittel-, Dispersions-, Montage-, Haft- und Kontakt-Klebstoffe sowie Redispersionspulver, Alleskleber und Klebestifte. Zu verkleben sind damit: Papier, Pappe, Holz, Textilien, Wandbeläge, Fliesen, Etiketten, Leder, Gummi, Kunststoffe, Glas, Keramik und Metall. Als Beschichtungen seien genannt: Plastisol, Dispersionsfarbe und Isolierung von Dächern. Die Dichtungsmassen können sowohl im Bau- als auch im Fahrzeugbereich eingesetzt werden. Die erfindungsgemäße Masse kann auch hydraulischen Bindemitteln zugesetzt werden, z.B. Zement oder Gips.

Die Erfindung wird anhand folgender Beispiele im einzelnen erläutert:

### Beispiele

### I: Fettstoffe und Polyvinylacetat

### A: Herstellung von Mischungen mit Polyvinylacetaten

Die Fettzusätze wurden in einen handelsüblichen Holzklebstoff (Pona l^{R}, 51 %ige Polyvinylacetatdispersion; HENKEL) unter Zusatz von 50 Gew.% Glaskugeln in einer Schüttelmaschine (Red-Devil) 30 Minuten lang eingearbeitet. Alle prozentualen Angaben in den Beispielen verstehen sich, sofern nicht anders vermerkt, als Gewichtsprozent. Die Zusammensetzung ist Tabelle 1 zu entnehmen.

### B: Eigenschaften von Mischungen mit Polyvinylacetaten

### a) Bestimmung der Zugscherfestigkeit

Zur Bestimmung der Zugscherfestigkeiten (ZSF) wurde der erhaltene Klebstoff mittels eines 1-mm-Zahnspachtels beidseitig auf die schmalen Enden der großen Holzflächen von jeweils sechs dreilagigen 50x80x4-mm-Buchensperrholzplättchen aufgebracht. Jeweils zwei Holzplättchen wurden 2 cm an der Schmalseite überlappend in Kontakt gebracht, mit jeweils vier Wäscheklammern fixiert und nach einer Lagerzeit von 16 Stunden bei Raumtemperatur mit einem Zug von 15 mm/Minute auf einer Zwick-Zerreißmaschine zerissen. Die Zusammensetzung der Klebstoffe und das Ergebnis der Verklebungen sind in der Tabelle 1 dargestellt.

**Tabelle 1**

| modifizierte Dispersionsklebstoffe und Zugscherfestigkeit von Holzverklebungen | | | |
|---|---|---|---|
| Bsp | Modifizierung mit | ZSF [N/mm²] | Bruchbild |
| V | - | 7,7 | Holzbruch |
| 1 | 10 % Rindertalg | 7,2 | Holzbruch |
| 2 | 10 % Sonnenblumenöl | 6,7 | tw. **) Holzbruch |
| 3 | 10 % Lackleinöl | 6,8 | tw. **) Holzbruch |
| 4 | 30 % Rindertalg | 5,6 | tw. **) Holzbruch |
| 5 | 10 % Fritierfett *) | 7,3 | Holzbruch |
| 6 | 30 % Fritierfett *) | 4,0 | Klebstoffbruch |

| | | | |
|---|---|---|---|
| *): Das Fritierfett wurde unter der Bezeichnung "Fritürenfett, halbflüssig", von der Firma Rau bezogen. | | | |
| **): tw. bedeutet teilweise. | | | |

Nach einer Warmlagerung von 10 Tagen bei 50 °C wurde nochmals die Zugscherfestigkeit bestimmt.

**Tabelle 2**

| Zugscherfestigkeit nach Warmlagerung | | | |
|---|---|---|---|
| Bsp | Modifizierung mit | ZSF [N/mm²] | Bruchbild |
| 5 | 10 % Fritierfett | 9,9 | Holzbruch |
| 6 | 30 % Fritierfett | 6,9 | tw. Holzbruch |

### b) Bestimmung der Wärmestandfestigkeit:

Zur Bestimmung der Wärmestandfestigkeiten wurden gelochte massive 25x100x4mm-Buchenholzplättchen wie vorstehend beschrieben mit einer Überlappungszone von 25x25mm verklebt. Nach 16 h Trockenzeit bei Raumtemperatur wurden die Verklebungen unter einer Belastung mit 1350 g innerhalb von 5 Stunden von 50 auf 200°c erwärmt und zwanzig Minuten bei dieser Temperatur belassen. Alle Verklebungen hielten dieser Belastung stand.

### c) Ausschwitzneigung bei Papierverklebungen:

Zur Ermittlung der Ausschwitzneigung der zugesetzten Fette wurde ungestrichenes weißes Schreibpapier einseitig mit Klebstoff dünn bestrichen und unter manuellem Glattstreichen gegen eine zweite Lage Papier verklebt.

Das Durchschlagen der im Klebstoff enthaltenen Fette wurde im Gegenlicht immer wieder optisch bis zu einer Gesamtlagerzeit von vier Wochen beurteilt.
Zusatzmengen von bis zu 10 Gew.% Sonnenblumenöl, Fritürenfett, Rindertalg oder Lackleinöl blieben ohne optische Effekte.
Bei Fettzusätzen von 20 Gew. % und mehr trat Fettfleckbildung ein. Das nach einer Lagerzeit von 16 Stunden jeweils erhaltene Bild änderte sich nicht mehr.

### d) Bestimmung der Härte

Die Mischung 5 sowie Ponal-Holzklebstoff wurden mittels eines Edelstahlrakels mit einer Spaltbreite von 250 µm auf Glasplatten zu einem Film von ca. 45 µm (bestimmt mit Erichsen Filmdickemeßgerät) ausgezogen.
Nach jeweils 6, 24 und 336 h wurde die Pendelhärte nach König bestimmt. Es zeigt sich, daß durch Fettzusatz nach Trocknung eine anhaltende Verringerung der Härte erreicht wird.

**Tabelle 3**

| Pendelhärte in Abhängigkeit vom Fett-Zusatz | | | |
|---|---|---|---|
| | Pendelhärte [sec] nach einer Trockenzeit von | | |
| Beispiel | 6 h | 24 h | 14 d |
| 1 | 9,8 | 7 | 8,4 |
| 5 | 16 | 15,4 | 12,6 |

### A: Zusatz des Fettstoffes zu der Monomeren-Dispersion

### Beispiel 7:

### a) Herstellung einer Polyvinylacetat-Sojaölepoxid-Leinöl-Dispersion

In einem Vierhalskolben mit zwei Tropftrichtern, Rückflußkühler, Rührer und Thermometer wurden 199,7 g Wasser vorgelegt und 17.8 g Mowiol^{R} 18/88 (zu 88 mol % verseiftes Polyvinylacetat der Firma Hoechst) bei 80°C darin gelöst. In einem Tropftrichter wurde eine Mischung aus 140 g Vinylacetat, 40 g Lackleinöl und 20 g Sojaölepoxid mit einem Epoxid-Sauerstoff-Gehalt von 6,41 % vorgelegt. In den zweiten Tropftrichter wurde eine Lösung von 0.4 g Ammoniumperoxodisulfat in 30 g Wasser gefüllt. Der Polymerisationsstart erfolgte, indem 11.1 ml der Ammoniumpersulfatlösung in den Kolben abgelassen wurden und mit der kontinuierlichen Dosierung der Vinylactetat-Fettstoff-Mischung begonnen wurde. Die Dosierung wurde so gesteuert, daß die Gesamtmenge in ca. 4 h zudosiert war. Die verbliebene Ammoniumperoxodisulfat-Lösung wurde ebenfalls kontinuierlich über den gleichen Zeitraum zudosiert.
Nachdem sämtliches Vinylacetat-Monomer abreagiert war, wurde die Dispersion auf Raumtemperatur abgekühlt und abgefüllt. Die Dispersion war über 6 Monate stabil.
Die Filme daraus waren weich und elastisch.

### Überprüfung des freien Fettstoff-Gehalts:

Nach dem in Beispiel 1 beschriebenen Verfahren waren 16,0 % der eingesetzten Leinöl/Sojaölepoxid-Menge extrahierbar.

### b) Prüfung der Klebkraft:

Auf zwei Buchenholzprüfkörpern wurden 15 mm² mit der Dispersion bestrichen und mit einem Rakel gleichmäßig verteilt. Beide Prüfkörper werden mit den bestrichenen Flächen zusammengefügt und mit Klammern fixiert. Nach 7 Tagen Lagerung bei Raumklima wurde die Verklebung mit Hilfe einer Zugprüfmaschine zerrissen. Bei einer Kraft von 6.000 N/cm² zerriß der Prüfkörper unter Holzbruch.

### II: Fettstoff und Polyacrylat

Fettstoffe zeigen auch bei Polyacrylaten hervorragende Weichmacher-Wirkungen.

### A: Quell-Wirkung

Filme aus Homo-Polybutylacrylat werden 24 Stunden bei Raumtemperatur (20 °C) und bei 60 °C in die Testsubstanzen getaucht. Die Quellung des Homopolymeren wird in Prozent angegeben, wobei 100 % das Ausgangsvolumen darstellt. Die folgenden Ergebnisse zeigen, daß fettchemische Ester ähnliches Quellvermögen besitzen, wie die für Acrylat-Dispersionen empfohlenen Weichmacher a), b) und c):

| Bsp. | Testsubstanz | 20 °C | 60 °C |
|---|---|---|---|
| a) | Paraplex WP 1 | 120 | |
| b) | Plastilit 3060 | 113 | |
| c) | Butylbenzylphthalat | 100 | 133 |
| d) | Eurucasäuremethylester | 187 | |
| e) | Umsetzungsprodukt von Epoxystearinsäuremethylester mit Glykol (2:1) | 100 | 133 |
| f) | Kokos-2-ethylhexylester | 100 | 147 |

### B: Glasübergangstemperatur (TG)

85 Gew.-Teile einer Dispersion von Homo-Polybutylacrylat werden auf 60 °C erwärmt und mit 15 Gew.-Teilen verschiedener Testsubstanzen 30 Minuten gemischt. Die Mischung wird dann auf 20 °C abgekühlt. Aus der Mischung wird nun ein Film bei 40 °C in einem Wärmeschrank hergestellt. Die Glasumwandlungs-Temperatur (TG) des Polymerfilms wurde folgendermaßen bestimmt: Meßzelle DSC 910 mit DuPont 2100, Al-Tiegel mit Deckel, 3 l/h N2, 20 K/Min.. Die folgende Ergebnisse zeigen, daß die Glasumwandlungstemperatur durch Fettsäureester zumindest gleich stark herabgesetzt wird wie durch Butylbenzylphthalat:

| Bsp. | Testsubstanz | FK | Visk. | TG |
|---|---|---|---|---|
| 0 | - | 60 | 100 | -41 °C |
| 1 | Butylbenzylphthalat | 68,7 | 650 | -54 °C |
| 2 | Plastilit 3060 | Dispersion koaguliert! | | |
| 3 | Rapsfettsäuremethylester | 66,5 | 370 | -62 °C |
| 4 | Epoxystearinsäuremethylester | 67,8 | 700 | -71 °C |

Die Feststoff-Konzentration (FK) wurde folgendermaßen bestimmt: 5 bis 10 g der Probe werden in einer Aluschale 2 Stunden bei 120 bis 130 °C erhitzt. Dann wird zurückgewogen. Die Viskosität (Visk) wurden folgendermaßen bestimmt: Brookfield RVT (20 °C).

### C: Klebetechnische Untersuchungen

Es wurden klebetechnische Untersuchungen - wie in I.B. beschrieben - durchgeführt. Dabei wurden die dortigen Ergebnisse bestätigt. Im einzelnen wurden folgende Werte erhalten:

| Bsp. | RK mm | Dehnung % | Schwitzen |
|---|---|---|---|
| 0 | 40 | 900 | nein |
| 1 | 22 | 1558 | nein |
| 3 | 19 | 1670 | nein |
| 4 | 16 | 1740 | nein |

Die Reißdehnung (Dehnung) wurde unter folgenden Bedingungen bestimmt: Instron 4302, automatisches Materialprüfsystem Serie IX, Probenbreite 5 mm, Probendicke 1 mm, Probenlänge 15 mm, Zuggeschwindigkeit 200 mm/Min..

Die Verträglichkeit der Komponenten (Schwitzen) wurde folgendermaßen bestimmt: Die Filme wurden bei 60 °C zwischen Silikonpapier gelagert und nach 3 Wochen bezüglich Verfleckung des Papiers beurteilt.

Die Haftklebrigkeit (RK) wurde folgendermaßen bestimmt: Eine Stahlkugel (Durchmesser 20 mm, Gewicht 32,25 g) rollte eine Rampe (Höhe 26 mm; Laufstrecke 115 mm) auf einen Film der erfindungsgemäßen Zusammensetzung) hinunter. Die auf dem Polymerfilm zurückgelegte Strecke wurde gemessen (Angabe in mm).

## Patentansprüche

1. Bindemittel, die physikalisch und/oder chemisch abbinden mit einem Gehalt an Fettstoffen, dadurch gekennzeichnet, daß das Polymer des Bindemittels chemisch abbindet, z.B. über Isocyanatgruppen und Doppelbindungen, Hydroxyl-, Keto-, Aldehyd-, Carboxyl-, Alkoxysilan-, Amin-, Epoxid-Gruppen.

2. Bindemittel nach Anspruch 1, gekennzeichnet durch einen Gehalt an 0,5 bis 60, vorzugsweise 10 bis 50 und insbesondere 15 bis 40 Gew.-% an Fettstoffen, bezogen auf das Bindemittel insgesamt.

3. Bindemittel nach Anspruch 1 oder 2, gekennzeichnet durch Ester von Fettsäuren oder Fettalkoholen, insbesondere Triglyceride von höheren Fettsäuren und vorzugsweise natürliche Fette und Öle als Fettstoffe.

4. Bindemittel nach mindestens einem der vorangegangenen Ansprüche, dadurch gekennzeichnet, daß es auf einem physikalisch und/oder chemisch abbindenden Polymeren mit einem Molekulargewicht von 8 000 bis 2 000 000, vorzugsweise 10 000 bis 800 000 und insbesondere von 30 000 bis 300 000 basiert.

5. Bindemittel nach mindestens einem der vorangegangenen Ansprüche, gekennzeichnet durch ein physikalisch und/oder chemisch abbindendes Polymer, hergestellt durch Polyaddition, Polykondensation oder Polymerisation aus der Gruppe: Polyurethane, Polyamide, Polyester, Poly(meth)acrylate, Polyvinylester und Polyvinylchlorid, vorzugsweise mindestens ein Polymer aus der Gruppe Polyurethane, Poly(meth)acrylate und Polyvinylester und insbesondere Polyvinylacetat, wobei auch die entsprechenden Copolymere, insbesondere die Terpolymere mit einem überwiegenden Anteil des jeweiligen Monomeren gemeint sind.

6. Bindemittel nach mindestens einem der vorangegangenen Ansprüche, dadurch gekennzeichnet, daß es bei 20 °C flüssig ist und insbesondere eine wäßrige Dispersion mit einem Feststoffgehalt von 20 bis 85, vorzugsweise 35 bis 80 und insbesondere 45 bis 75 Gew.-% ist.

7. Herstellung des Bindemittels nach mindestens einem der Ansprüche 1 bis 6, dadurch gekennzeichnet, daß man den Fettstoff dem Bindemittel vor, bei oder nach seiner Herstellung zusetzt, insbesondere nach seiner Herstellung.

8. Verwendung der Bindemittel nach mindestens einem der Ansprüche 1 bis 6 zum Kleben, Beschichten und Dichten.

9. Verwendung nach Anspruch 8, gekennzeichnet durch das Kleben, Beschichten und Dichten von Holz, Pappe, Papier, Wandbelägen wie Tapeten, Kork, Leder, Filz, Textilien, Kunststoffe
- insbesondere Bodenbelägen aus PVC, Linoleum und Polyolefinen, sei es in Form von Folien oder textilen Flächengebilden -,
mineralischen Substraten wie Glas, Quarz, Schlacken,
Gestein und Keramik und Metalle, insbesondere mit unterschiedlichem elastischem Verhalten oder unterschiedlichem Wärmeausdehnungskoeffizienten der Substrate.
